# EUROPEAN PATENT SPECIFICATION

(11) **EP 3 520 539 B1**
(45) Date of publication and mention of the grant of the patent: **09.07.2025**
(21) Application number: 17751191.2
(22) Date of filing: 29.07.2017
(51) Int. Cl.: H04W 74/0833, H04L 5/00, H04W 74/0836

(54) **IMPROVED RANDOM ACCESS PROCEDURE AND UPLINK-BASED MOBILITY**
VERBESSERTES DIREKTZUGRIFFSVERFAHREN UND UPLINK-BASIERTE MOBILITÄT
PROCÉDURE D'ACCÈS ALÉATOIRE ET MOBILITÉ BASÉE SUR UNE LIAISON MONTANTE AMÉLIORÉES

(30) Priority: 30.09.2016 US 201662402956 P; 28.07.2017 US 201715663574
(43) Date of publication of application: 07.08.2019
(73) Proprietor: Qualcomm Incorporated, San Diego, CA 92121-1714 (US)
(72) Inventor: LY, Hung, San Diego, California 92121 (US); XU, Hao, San Diego, California 92121 (US); JI, Tingfang, San Diego, California 92121 (US); SORIAGA, Joseph Binamira, San Diego, California 92121-1714 (US)
(74) Representative: Bardehle Pagenberg Partnerschaft mbB Patentanwälte Rechtsanwälte
(86) International application number: PCT/US2017/044556
(87) International publication number: WO 2018/063490

(56) References cited:
- QUALCOMM INCORPORATED: "Uplink based mobility physical channels", vol. RAN WG1, no. Gothenburg, Sweden; 20160822 - 20160826, 21 August 2016 (2016-08-21), XP051125354, Retrieved from the Internet <URL:http://www.3gpp.org/ftp/Meetings_3GPP_SYNC/RAN1/Docs/> [retrieved on 20160821]
- QUALCOMM INCORPORATED: "High speed mobility performance evaluations", vol. RAN WG1, no. Gothenburg, Sweden; 20160822 - 20160826, 21 August 2016 (2016-08-21), XP051125355, Retrieved from the Internet <URL:http://www.3gpp.org/ftp/Meetings_3GPP_SYNC/RAN1/Docs/> [retrieved on 20160821]
- QUALCOMM INCORPORATED: "DL and UL based mobility procedures", vol. RAN WG1, no. Gothenburg, Sweden; 20160822 - 20160826, 21 August 2016 (2016-08-21), XP051125353, Retrieved from the Internet <URL:http://www.3gpp.org/ftp/Meetings_3GPP_SYNC/RAN1/Docs/> [retrieved on 20160821]
- QUALCOMM INCORPORATED: "RACH Procedure for Enhanced LAA", vol. RAN WG2, no. Dubrovnik, Croatia; 20160412 - 20160416, 2 April 2016 (2016-04-02), XP051082641, Retrieved from the Internet <URL:http://www.3gpp.org/ftp/tsg_ran/WG2_RL2/TSGR2_93bis/Docs/> [retrieved on 20160402]
- QUALCOMM INCORPORATED: "Uplink based mobility physical channels", vol. RAN WG1, no. Gothenburg, Sweden; 20160822 - 20160826, 21 August 2016 (2016-08-21), XP051125354, Retrieved from the Internet <URL:http://www.3gpp.org/ftp/Meetings_3GPP_SYNC/RAN1/Docs/> [retrieved on 20160821]
- QUALCOMM INCORPORATED: "High speed mobility performance evaluations", vol. RAN WG1, no. Gothenburg, Sweden; 20160822 - 20160826, 21 August 2016 (2016-08-21), XP051125355, Retrieved from the Internet <URL:http://www.3gpp.org/ftp/Meetings_3GPP_SYNC/RAN1/Docs/> [retrieved on 20160821]
- QUALCOMM INCORPORATED: "DL and UL based mobility procedures", vol. RAN WG1, no. Gothenburg, Sweden; 20160822 - 20160826, 21 August 2016 (2016-08-21), XP051125353, Retrieved from the Internet <URL:http://www.3gpp.org/ftp/Meetings_3GPP_SYNC/RAN1/Docs/> [retrieved on 20160821]

## Description

### TECHNICAL FIELD

The technology discussed in this disclosure relates generally to wireless communication systems, and more particularly to uplink (UL) random access and UL-based mobility for 5^{th} Generation (5G) new radio (NR) networks. Certain embodiments can enable and provide improved communication techniques allowing communication devices (e.g., user equipment devices or UEs) to reduce random access latency for initial network access and UL-based mobility procedures.

### INTRODUCTION

Wireless communication systems are widely deployed to provide various types of communications such as voice, data, video, etc. These systems may be multiple-access systems capable of supporting communication with multiple access terminals by sharing available system resources (*e.g.,* bandwidth and transmit power). Examples of such multiple-access systems include code division multiple access (CDMA) systems, time division multiple access (TDMA) systems, frequency division multiple access (FDMA) systems, 3GPP Long Term Evolution (LTE) systems, and orthogonal frequency division multiple access (OFDMA) systems.

Typically, a wireless communication network comprises several base stations (BSs), wherein each BS communicates with a mobile station or user equipment (UE) using a forward link and each mobile station (or access terminal) communicates with base station(s) using a reverse link. A UE may synchronize to a network for initial cell access by performing a random access procedure, which may include a number of messages (e.g., about 4) exchange between the UE and a BS. Thus, there is a latency in establishing a connection with the network. After the UE establishes a connection with the network, the UE may move from one cell coverage area to another cell coverage area. When the UE moved out of a current serving cell coverage area, a handover process may be performed to enable the UE to continue communication with the network under a different cell coverage area. Typically, UE mobility management is supported through a downlink (DL)-based mobility approach, where the network sends references signals (RSs) and the UE performs cell search and measurements based on the RSs. Cell search and measurements consume power at the UE, as evident from 3GPP R1-166387. Thus, a more efficient random access procedure and mobility support may benefit wireless communication. 3GPP draft document R2-162911 by Qualcomm, published on April 2, 2016, with title 'RACH Procedure for Enhanced LAA', and with non-patent literature reference number XP051082641, discloses that one simplification to the legacy LAA random access procedure in 4 steps would be to transmit the information which is carried in msg3 (such as RRC Connection Request) along with msg1 (i.e. RACH preamble). Similarly, the current msg2 and msg4 can be combined to a single message. In this case, for example, RRC Connection Setup can be completed in two steps, in order to reduce latency in the RACH procedure.

### BRIEF SUMMARY OF SOME EXAMPLES

Embodiments of the present disclosure provide mechanisms for random access and UL-based mobility that can reduce random access latency. A UE simultaneously transmits a signal including a random access preamble and data in a single transmission. The data includes a connection request message during an initial network access or, in an example which does not fall within the scope of the claims, may include UE identifier information during a UL-based mobility procedure. A BS responds to the signal by including a random access response and a connection response in a single transmission during an initial network access or, in an example which does not fall within the scope of the claims, including an acknowledgement and paging information in a single transmission.

The invention is defined by the subject-matter of the independent claims. Particular embodiments of the invention are set out in the dependent claims.

### BRIEF DESCRIPTION OF THE DRAWINGS

FIG. 1 illustrates a wireless communication network.
FIG. 2 illustrates a subframe configuration.
FIG. 3 illustrates a user equipment (UE) radio resource control (RRC) state diagram 300.
Fig. 4 illustrates a wireless communication network that implements uplink (UL)-based mobility.
FIG. 5 is a block diagram of an exemplary UE.
FIG. 6 is a block diagram of an exemplary base station (BS).
FIG. 7 is a protocol diagram of a method of a 4-step random access procedure.
FIG. 8 illustrates a subframe that includes a physical random access channel (PRACH).
FIG. 9 is a protocol diagram of a method of a 2-step random access procedure.
FIG. 10 illustrates a subframe that includes an enhanced PRACH (ePRACH).
FIG. 11 is a protocol diagram of a method of performing UL mobility in a RRC common state.
FIG. 12 illustrates a subframe that includes a physical uplink measurement indication channel (PUMICH).
FIG. 13 is a protocol diagram of a method of performing UL mobility in a RRC dedicated state.
FIG. 14 illustrates a subframe including a physical uplink measurement references signal (PUMRS) channel.
FIG. 15 is a flow diagram of a method of performing UL-based mobility and random access.
FIG. 16 is a flow diagram of a method of performing UL-based mobility and random access.
Apart from Fig. 10 all of the remaining figures are only used for illustrative purposes, aspects depicted therein which do not fall within the scope of the claims are merely examples used for explanation of the invention.

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

The techniques described herein may be used for various wireless communication networks such as code-division multiple access (CDMA), time-division multiple access (TDMA), frequency-division multiple access (FDMA), orthogonal frequency-division multiple access (OFDMA), single-carrier FDMA (SC-FDMA) and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the wireless networks and radio technologies mentioned above as well as other wireless networks and radio technologies, such as a next generation (e.g., 5^{th} Generation (5G)) network.

The present disclosure describes an improved random access procedure and UL-based mobility. UL-based mobility refers to a network performing UE search and/or measurements based on reference signals transmitted by UEs. In the disclosed embodiments, a UE may simultaneously transmit a random access preamble and data in a single transmission. For random access, the UE may simultaneously transmit a random access preamble and a connection request message (e.g., the data) instead of separately, and thus may reduce random access latency. For UL-based mobility, when the UE is in a RRC common state, the UE may transmit a random access preamble and a UE-identifier (ID) (e.g., the data) that identifies the UE in the network. Upon detecting the random access preamble and the UE-ID, a BS or a transmission/reception point (TRP) may transmit an acknowledgement (ACK) to the UE and may include paging information. When the UE is in a RRC dedicated state, the UE may send a UL mobility reference signal and the BS may transmit an ACK to the UE and may include handover information. The disclosed embodiments define an ePRACH and a PUMICH in a UL-centric self-contained subframe for carrying both a random access preamble and data for random access and UL-based mobility, respectively. In addition, the disclosed embodiments defined a PUMRS channel in a UL-centric self-contained subframe for carrying a UL mobility reference signal.

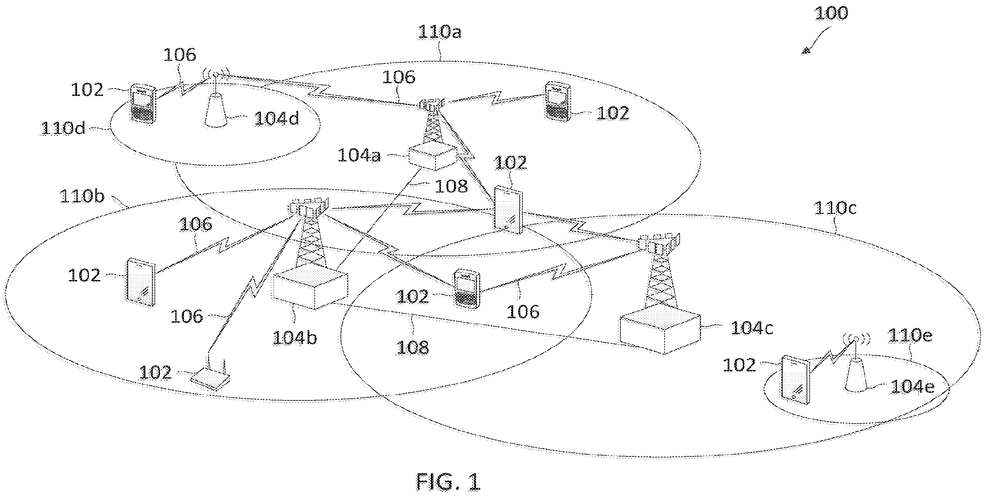

FIG. 1 illustrates a wireless communication network 100 according to embodiments of the present disclosure. The network 100 may include a number of UEs 102, as well as a number of BSs 104. The BSs 104 may include an Evolve Node B (eNodeB). A BS 104 may be a station that communicates with the UEs 102 and may also be referred to as a base transceiver station, a node B, an access point, and the like.

The BSs 104 communicate with the UEs 102 as indicated by communication signals 106. A UE 102 may communicate with the BS 104 via an uplink (UL) and a downlink (DL). The downlink (or forward link) refers to the communication link from the BS 104 to the UE 102. The UL (or reverse link) refers to the communication link from the UE 102 to the BS 104. The BSs 104 may also communicate with one another, directly or indirectly, over wired and/or wireless connections, as indicated by communication signals 108.

The UEs 102 may be dispersed throughout the network 100, as shown, and each UE 102 may be stationary or mobile. The UE 102 may also be referred to as a terminal, a mobile station, a subscriber unit, etc. The UE 102 may be a cellular phone, a smartphone, a personal digital assistant, a wireless modem, a laptop computer, a tablet computer, an IoT device, etc. The network 100 is one example of a network to which various aspects of the disclosure apply.

Each BS 104 may provide communication coverage for a particular geographic area. In 3GPP, the term "cell" can refer to this particular geographic coverage area of a BS and/or a BS subsystem serving the coverage area, depending on the context in which the term is used. In this regard, a BS 104 may provide communication coverage for a macro cell, a pico cell, a femto cell, and/or other types of cell. A macro cell generally covers a relatively large geographic area (e.g., several kilometers in radius) and may allow unrestricted access by UEs with service subscriptions with the network provider. A pico cell may generally cover a relatively smaller geographic area and may allow unrestricted access by UEs with service subscriptions with the network provider. A femto cell may also generally cover a relatively small geographic area (e.g., a home) and, in addition to unrestricted access, may also provide restricted access by UEs having an association with the femto cell (e.g., UEs in a closed subscriber group (CSG), UEs for users in the home, and the like). A BS for a macro cell may be referred to as a macro BS. A BS for a pico cell may be referred to as a pico BS. A BS for a femto cell may be referred to as a femto BS or a home BS.

In the example shown in FIG. 1, the BSs 104a, 104b and 104c are examples of macro BSs for the coverage areas 110a, 110b and 110c, respectively. The BSs 104d and 104e are examples of pico and/or femto BSs for the coverage areas 110d and 110e, respectively. As will be recognized, a BS 104 may support one or multiple (e.g., two, three, four, and the like) cells.

The network 100 may also include relay stations. A relay station is a station that receives a transmission of data and/or other information from an upstream station (e.g., a BS, a UE, or the like) and sends a transmission of the data and/or other information to a downstream station (e.g., another UE, another BS, or the like). A relay station may also be a UE that relays transmissions for other UEs. A relay station may also be referred to as a relay BS, a relay UE, a relay, and the like.

The network 100 may support synchronous or asynchronous operation. For synchronous operation, the BSs 104 may have similar frame timing, and transmissions from different BSs 104 may be approximately aligned in time. For asynchronous operation, the BSs 104 may have different frame timing, and transmissions from different BSs 104 may not be aligned in time.

In some implementations, the network 100 utilizes orthogonal frequency division multiplexing (OFDM) on the downlink and single-carrier frequency division multiplexing (SC-FDM) on the UL. OFDM and SC-FDM partition the system bandwidth into multiple (K) orthogonal subcarriers, which are also commonly referred to as tones, bins, or the like. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, K may be equal to 72, 180, 300, 600, 900, and 1200 for a corresponding system bandwidth of 1.4, 3, 5, 10, 15, or 20 megahertz (MHz), respectively. The system bandwidth may also be partitioned into sub-bands. For example, a sub-band may cover 1.08 MHz, and there may be 1, 2, 4, 8 or 16 sub-bands for a corresponding system bandwidth of 1.4, 3, 5, 10, 15, or 20 MHz, respectively.

In an embodiment, the BSs 104 can assign or schedule transmission resources (e.g., in the form of time-frequency resource blocks) for DL and UL transmissions in the network 100. The communication can be in the form of radio frames. A radio frame may be divided into a plurality of subframes. In a FDD mode, simultaneous UL and DL transmissions may occur in different frequency bands. In a TDD mode, UL and DL transmissions occur at different time periods using the same frequency band. For example, a subset of the subframes in a radio frame may be used for DL transmissions and another subset of the subframes may be used for UL transmissions. The DL and UL subframes can be shared among the BSs 104 and the UEs 102, respectively.

The DL subframes and the UL subframes can be further divided into several regions. For example, each DL or UL subframe may have pre-defined regions for transmissions of reference signals, control information, and data. Reference signals are pre-determined signals that facilitate the communications between the BSs 104 and the UEs 102. For example, a reference signal can have a particular pilot pattern or structure, where pilot tones may span across an operational bandwidth or frequency band, each positioned at a pre-defined time and a pre-defined frequency. Control information may include resource assignments and protocol controls. Data may include protocol data and/or operational data.

In an embodiment, the BSs 104 can broadcast system information associated with the network 100. Some examples of system information may include physical layer information such as cell bandwidths and frame configurations, cell access information, and neighbor cell information. A UE 102 can access the network 100 by listening to the broadcast system information and requests connection or channel establishments with a BS 104. For example, the UE 102 can perform a random access procedure to begin communication with the BS 104 and subsequently may perform connection and/or registration procedures to register with the BS 104. After completing the connection and/or the registration, the UE 102 and the BS 104 can enter a normal operation stage, where operational data may be exchanged.

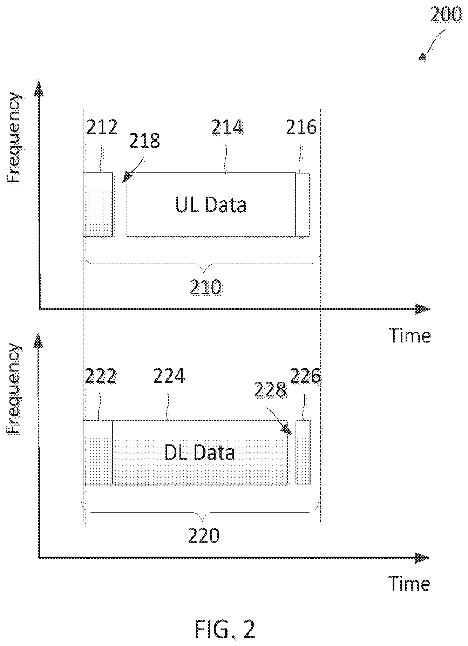

FIG. 2 illustrates a subframe configuration 200 according to embodiments of the present disclosure. The configuration 200 may be employed by the BSs 104 and the UEs 102 for transmission. In FIG. 2, the x-axis represents time in some constant units and the y-axis represents frequency in some constant units. The configuration 200 shows two self-contained subframes 210 and 220. The subframes 210 and 220 can be configured for UL transmission or DL transmission. As an example, the subframe 210 is configured for UL transmission and the subframe 220 is configured for DL transmission. Thus, the subframe 210 may be referred to as a UL-centric subframe and the subframe 220 may be referred to as a DL-centric subframe. The subframe 210 includes a DL control portion 212 for carrying DL control, a UL data portion 214 for carrying UL data, and a UL control portion 216 for carrying UL control. The subframe 220 includes a DL control portion 222 for carrying DL control, a DL data portion 224 for carrying DL data, and a UL control portion 226 for carrying UL control. As shown, the subframe 210 further includes s a guard band 218 between the DL control portion 212 and the UL data portion 214. The subframe 220 further includes s a guard band 228 between the DL data portion 224 and the UL control portion 226. The guard bands 218 and 228 allow for switching between transmit and receive.

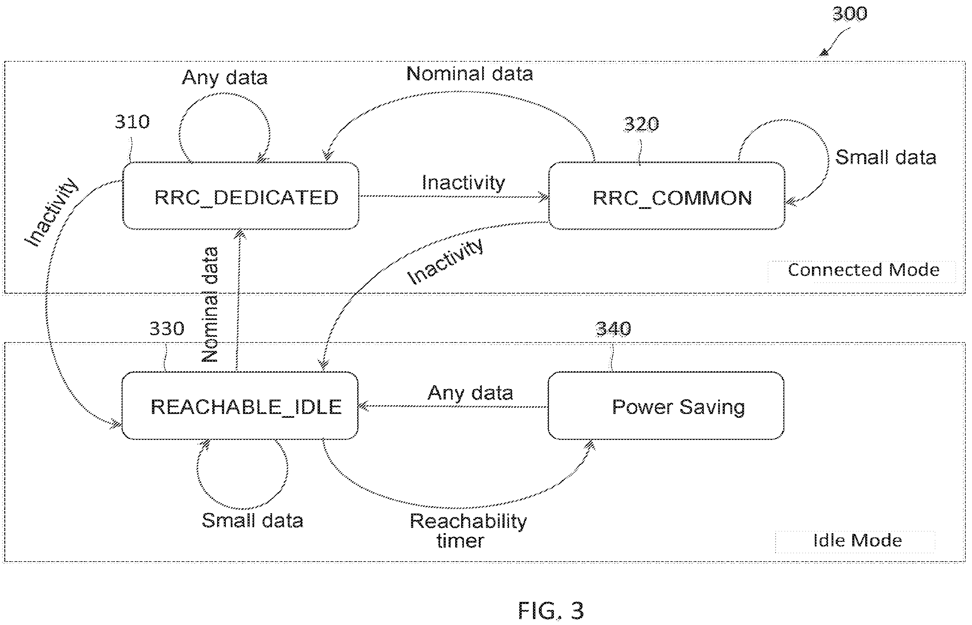

FIG. 3 illustrates a UE RRC state diagram 300, which is an example explaining the invention. The RRC state diagram 300 shows the RRC states of the UE 102 after completing an initial radio access network (RAN) or cell access. As shown, the UE 102 may transitions between a RRC dedicated state 310, a RRC common state 320, a reachable idle state 330, and a power saving state 340. In the RRC dedicated state 310, the UE 102 context is known to the RAN. The UE 102 may be assigned with air interface resources (e.g., physical resources). The UE 102 may transmit and receive any data. The UE 102 may transition from the RRC dedicated state 310 to the RRC common state 320 due to inactivity.

In the RRC common state 320, the UE 102 context is known to the RAN. The UE 102 has no assigned air interface resources. The UE 102 may transmit and receive a small amount of data. The UE 102 may transition from the RRC common state 320 to the RRC dedicated state 310 when a nominal amount of data reception or transmission occurs. The UE 102 may transition to from the RRC common state 320 to the reachable idle state 330 due to inactivity. When the UE 102 is in the RRC dedicated state 310 or the RRC common state 320, the UE 102 is in a connected mode.

In the reachable idle state 330, the context of the UE 102 is not known to the RAN. The UE 102 has no assigned air interface resources. The UE 102 may transmit and receive a small amount of data. The UE 102 may transition from the reachable idle state 330 to the RRC dedicated state 310 when a nominal amount of data reception or transmission occurs. The UE 102 may transition from the reachable idle state 330 to the power saving state 340 when a reachability timer expires.

In the power saving state 340, the context of the UE 102 is not known to the RAN. The UE 102 has no assigned air interface resources. The UE 102 has no data transmission or reception. The UE 102 may transition from the power saving state 340 to the reachability idle state 330 upon any data transmission or reception. When the UE 102 is in the reachability idle state 330 or the power saving state 340, the UE 102 is in an idle mode.

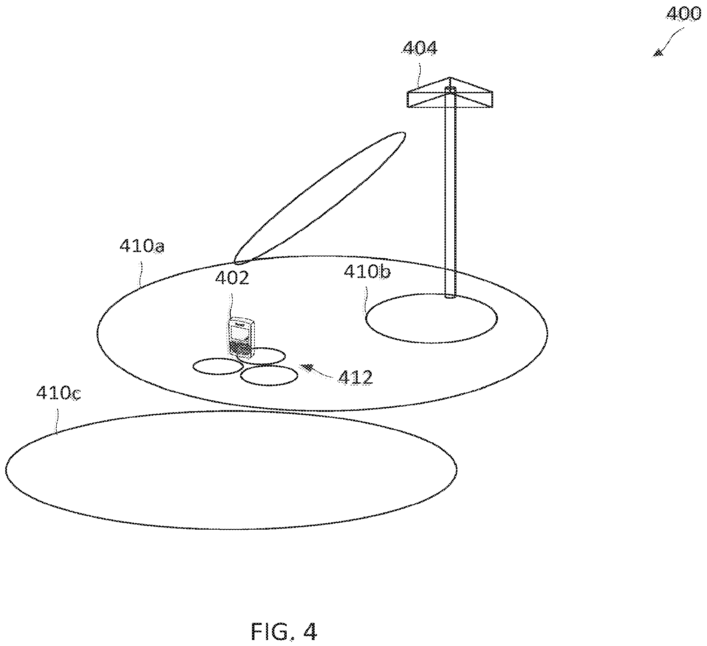

Fig. 4 illustrates a wireless communication network 400 that implements UL-based mobility according to embodiments of the present disclosure. FIG. 4 illustrates one transmission/reception point (TRP) 404 and one UE 402 for purposes of simplicity of discussion, though it will be recognized that embodiments of the present disclosure may scale to many more UEs 402 and/or TRPs 404. The TRP 404 may be substantially similar to the BSs 104, but may include remote radio heads for wireless signal transmission and reception and may communicate with a central unit for baseband processing. The UEs 402 may be substantially similar to the UEs 102. The UE 402 and the TRP 404 may communicate with each other at any suitable frequencies.

The network 400 includes a plurality of zones 410. A zone 410 is a collection of tightly synchronized cells. As shown, the zone 410a includes the zone 410b where the TRP 404 is located and a cluster of cells 412 serving the UE 402. To support UL-based intra-zone mobility, for example, within the zone 410a, the UE 402 may send UL mobility RSs for mobility tracking at the network side. For example, the TRP 404 may perform UE search and measurements based on the RSs sent by the UE 402. The TRP 404 may acknowledge the UL mobility RSs and signal paging indicator, as described in greater detail herein. The network 400 may autonomously selects a serving cell 412 (e.g., a TRP) or cells 412 (e.g., TRPs) to send the acknowledgement (ACK). Thus, intra-zone mobility may be transparent to the UE 402. For inter-zone mobility, for example, from the zone 410a to the zone 410b, the UE 402 may perform handover when a pre-determined condition is satisfied.

UL-based mobility provides several benefits. For example, power consumption may be reliably tradeoff at a UE. The handshake at the physical layer (e.g., layer 1 (L1)) may be more efficient, and thus may provide UEs and the network with channel information in a shorter amount of time than DL-based mobility. In addition, UL-based mobility may provide better mobility tracking since the network may have more antennas than UEs. UL-based mobility may benefit high mobility or poor channel conditions. For example, UL-based mobility may reduce UE power consumption, improve paging miss and call set up delay, improve network resource utilization efficiency, and reduce handover failure rate.

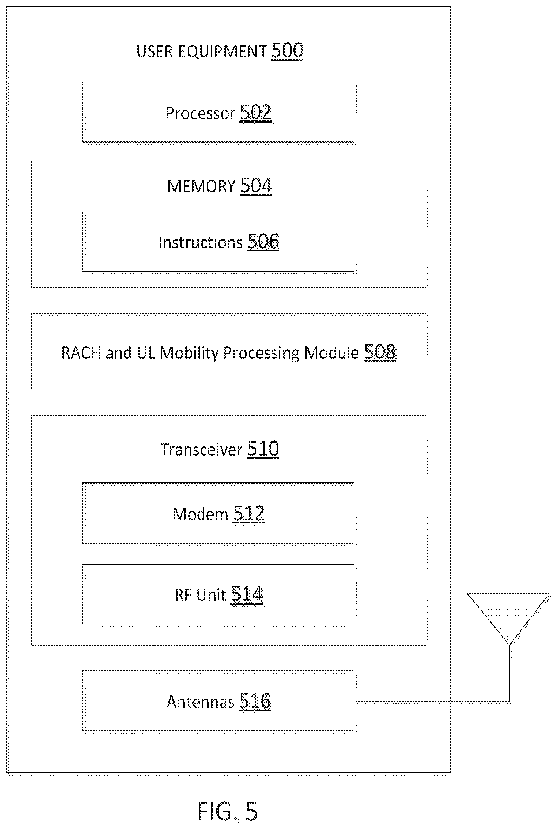

FIG. 5 is a block diagram of an exemplary UE 500 according to embodiments of the present disclosure. The UE 500 may be a UE 102 as discussed above. As shown, the UE 500 may include a processor 502, a memory 504, a random access (RACH) and UL mobility processing module 508, a transceiver 610 including a modem subsystem 612 and a RF unit 614, and an antenna 616. These elements may be in direct or indirect communication with each other, for example via one or more buses or other communication mediums.

The processor 502 may include a central processing unit (CPU), a digital signal processor (DSP), an application-specific integrated circuit (ASIC), a controller, a field programmable gate array (FPGA) device, another hardware device, a firmware device, or any combination thereof configured to perform the operations described herein. The processor 502 may also be implemented as a combination of computing devices, e.g., a combination of a DSP and a microprocessor, a plurality of microprocessors, one or more microprocessors in conjunction with a DSP core, or any other such configuration.

The memory 504 may include a cache memory (e.g., a cache memory of the processor 502), random access memory (RAM), magnetoresistive RAM (MRAM), read-only memory (ROM), programmable read-only memory (PROM), erasable programmable read only memory (EPROM), electrically erasable programmable read only memory (EEPROM), flash memory, solid state memory device, hard disk drives, other forms of volatile and non-volatile memory, or a combination of different types of memory. In an embodiment, the memory 504 includes a non-transitory computer-readable medium. The memory 504 may store instructions 506. The instructions 506 may include instructions that, when executed by the processor 502, cause the processor 502 to perform the operations described herein with reference to the UEs 102 in connection with embodiments of the present disclosure. Instructions 506 may also be referred to as code. The terms "instructions" and "code" should be interpreted broadly to include any type of computer-readable statement(s). For example, the terms "instructions" and "code" may refer to one or more programs, routines, subroutines, functions, procedures, etc. "Instructions" and "code" may include a single computer-readable statement or many computer-readable statements.

The RACH and UL mobility processing module 508 may be implemented via hardware, software, or combinations thereof. For example, the RACH and UL mobility processing module 508 may be implemented as a processor, circuit, and/or instructions 506 stored in the memory 504 and executed by the processor 502. The RACH and UL mobility processing module 508 may be used for various aspects of the present disclosure. For example, the RACH and UL mobility processing module 508 is configured to perform RACH and facilitate UL mobility, as described in greater detail herein.

As shown, the transceiver 510 may include the modem subsystem 512 and the RF unit 514. The transceiver 510 can be configured to communicate bi-directionally with other devices, such as the BSs 104. The modem subsystem 512 may be configured to modulate and/or encode the data from the memory 504 and/or the RACH and UL mobility processing module 508 according to a modulation and coding scheme (MCS), e.g., a low-density parity check (LDPC) coding scheme, a turbo coding scheme, a convolutional coding scheme, a digital beamforming scheme, etc. The RF unit 514 may be configured to process (e.g., perform analog to digital conversion or digital to analog conversion, etc.) modulated/encoded data from the modem subsystem 512 (on outbound transmissions) or of transmissions originating from another source such as a UE 102 or a BS 104. Although shown as integrated together in transceiver 510, the modem subsystem 512 and the RF unit 514 may be separate devices that are coupled together at the UE 102 to enable the UE 102 to communicate with other devices.

The RF unit 514 may provide the modulated and/or processed data, e.g. data packets (or, more generally, data messages that may contain one or more data packets and other information), to the antenna 516 for transmission to one or more other devices. The antenna 516 may further receive data messages transmitted from other devices. This may include, for example, transmission and reception of signals associated with RACH and UL mobility according to embodiments of the present disclosure. The antenna 516 may provide the received data messages for processing and/or demodulation at the transceiver 510. Although FIG. 5 illustrates antenna 516 as a single antenna, antenna 516 may include multiple antennas of similar or different designs in order to sustain multiple transmission links. The RF unit 514 may configure the antenna 516.

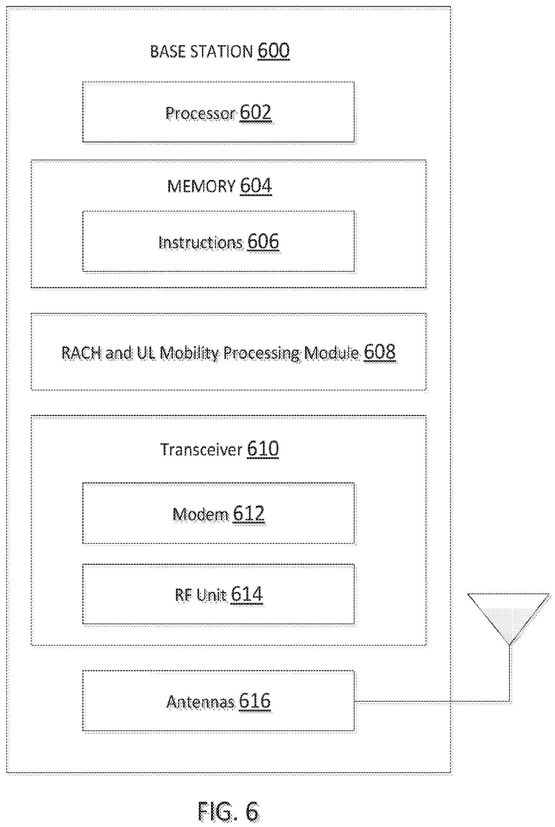

FIG. 6 is a block diagram of an exemplary BS 600 according to embodiments of the present disclosure. The BS 600 may be a BS 104 as discussed above. As shown, the BS 600 may include a processor 602, a memory 604, a RACH and UL mobility processing module 608, a transceiver 610 including a modem subsystem 612 and a RF unit 614, and an antenna 616. These elements may be in direct or indirect communication with each other, for example via one or more buses.

The processor 602 may have various features as a specific-type processor. For example, these may include a CPU, a DSP, an ASIC, a controller, a FPGA device, another hardware device, a firmware device, or any combination thereof configured to perform the operations described herein. The processor 602 may also be implemented as a combination of computing devices, e.g., a combination of a DSP and a microprocessor, a plurality of microprocessors, one or more microprocessors in conjunction with a DSP core, or any other such configuration.

The memory 604 may include a cache memory (e.g., a cache memory of the processor 602), RAM, MRAM, ROM, PROM, EPROM, EEPROM, flash memory, a solid state memory device, one or more hard disk drives, memristor-based arrays, other forms of volatile and non-volatile memory, or a combination of different types of memory. In some embodiments, the memory 604 may include a non-transitory computer-readable medium. The memory 604 may store instructions 606. The instructions 606 may include instructions that, when executed by the processor 602, cause the processor 602 to perform operations described herein. Instructions 606 may also be referred to as code, which may be interpreted broadly to include any type of computer-readable statement(s) as discussed above with respect to FIG. 5.

The RACH and UL mobility processing module 608 may be implemented via hardware, software, or combinations thereof. For example, the RACH and UL mobility processing module 608 may be implemented as a processor, circuit, and/or instructions 606 stored in the memory 604 and executed by the processor 602. The RACH and UL mobility processing module 608 may be used for various aspects of the present disclosure. For example, the RACH and UL mobility processing module 608 may perform RACH and support UL mobility, as described in greater detail herein.

As shown, the transceiver 610 may include the modem subsystem 612 and the RF unit 614. The transceiver 610 can be configured to communicate bi-directionally with other devices, such as the UEs 102 and/or another core network element. The modem subsystem 612 may be configured to modulate and/or encode data according to a MCS, e.g., a LDPC coding scheme, a turbo coding scheme, a convolutional coding scheme, a digital beamforming scheme, etc. The RF unit 614 may be configured to process (e.g., perform analog to digital conversion or digital to analog conversion, etc.) modulated/encoded data from the modem subsystem 612 (on outbound transmissions) or of transmissions originating from another source such as a UE 102. Although shown as integrated together in transceiver 610, the modem subsystem 612 and the RF unit 614 may be separate devices that are coupled together at the BS 104 to enable the BS 104 to communicate with other devices.

The RF unit 614 may provide the modulated and/or processed data, e.g. data packets (or, more generally, data messages that may contain one or more data packets and other information), to the antenna 616 for transmission to one or more other devices. This may include, for example, transmission of information to complete attachment to a network and communication with a camped UE 102 according to embodiments of the present disclosure. The antenna 616 may further receive data messages transmitted from other devices and provide the received data messages for processing and/or demodulation at the transceiver 610. Although FIG. 6 illustrates antenna 616 as a single antenna, antenna 616 may include multiple antennas of similar or different designs in order to sustain multiple transmission links.

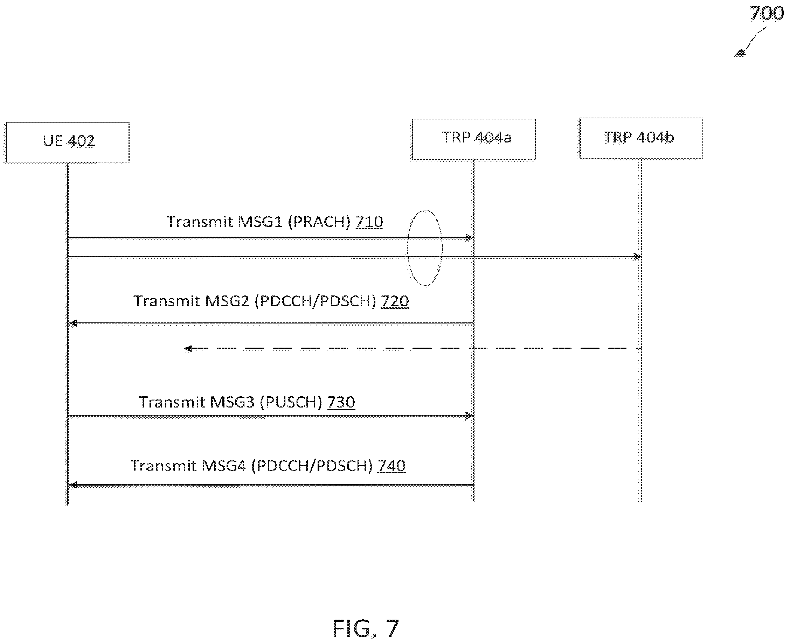

FIG. 7 is a protocol diagram of a method 700 of a 4-step random access procedure according to embodiments of the present disclosure. Steps of the method 700 can be executed by computing devices (e.g., a processor, processing circuit, and/or other suitable component) of wireless communication devices, such as the BSs 104 and 600, the TRP 404, and the UEs 102, 402, and 500. The method 700 is suitable for use in any RRC states as described in the UE RRC state diagram 300. The method 700 can be better understood with reference to FIG. 4. The method 700 may employ similar mechanisms as in the network 400. As illustrated, the method 700 includes a number of enumerated steps, but embodiments of the method 700 may include additional steps before, after, and in between the enumerated steps. In some embodiments, one or more of the enumerated steps may be omitted or performed in a different order. The method 700 illustrates two TRPs 404a and 404b and one UE 402 for purposes of simplicity of discussion, though it will be recognized that embodiments of the present disclosure may scale to many more UEs 402 and/or TRPs 404.

At step 710, the UE 402 transmits a message 1 (MSG1), which may be referred to as a random access preamble. The UE 402 may transmit the MSG1 in a physical random access channel (PRACH). The random access preamble may be a Zadoff-Chu sequence, a gold sequence, a m-sequence or any suitable orthogonal sequence and may include cyclic shifts. In some embodiments, the MSG1 may also reach the TRP 404b as shown by the arrows in the dashed oval.

At step 720, upon detecting the MSG1, the TRP 404a transmits a message 2 (MSG2), which may be referred to as a random access response (RAR). The TRP 404a may transmit allocation information for the MSG2 in a physical downlink control channel (PDCCH) and the MSG2 in a physical downlink shared channel (PDSCH). The MSG2 may include a detected random access preamble identifier (ID), timing advance (TA) information, a UL grant, a temporary cell-radio network temporary identifier (C-RNTI), and a backoff indicator. In some embodiments, the TRP 404b may also detect the MSG1 and may respond with a MSG2 as shown by the dashed arrow.

At step 730, the UE 402 transmits a message 3 (MSG3) based on the MSG2. The UE 402 may transmit the MSG3 in a physical uplink shared channel (PUSCH). The MSG3 may include a RRC connection request, a tracking area update, and a scheduling request.

At step 740, the TRP 404a transmits a message 4 (MSG4). The TRP 404a may transmit allocation information for the MSG4 in a PDCCH and the MSG4 in a PDSCH. The MSG4 includes a contention resolution. The PRACH and the PUSCH are sent in a UL-centric subframe (e.g., the subframe 210), as described in greater detail herein. The PRACH and the PUSCH may have the same numerology (e.g., a tone spacing of 15 kHz) or different numerologies.

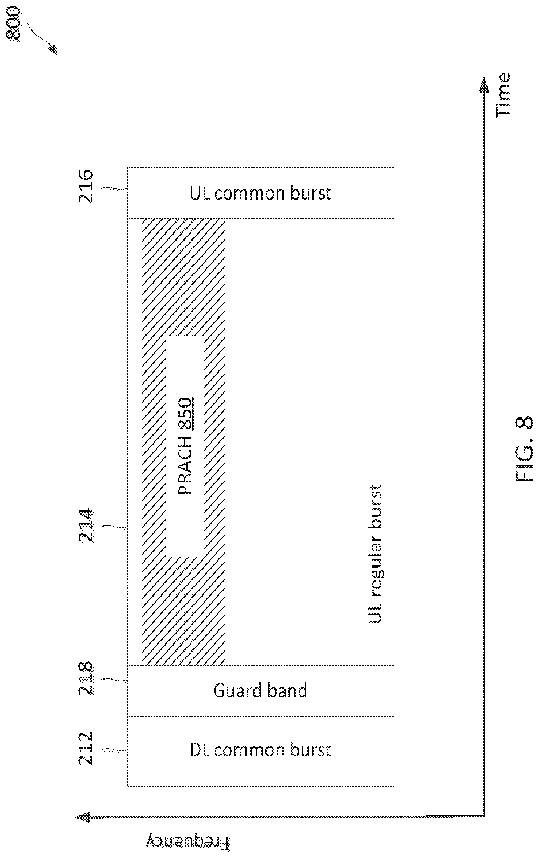

FIG. 8 illustrates a subframe 800 that includes a PRACH 850 according to the present disclosure. The subframe 800 is employed by the UE 402 when implementing the 4-step random access procedure described in the method 700. In FIG. 8, the x-axis represents time in some constant units and the y-axis represents frequency in some constant units. The subframe 800 is a UL-centric subframe and has a similar structure as the subframe 210. The subframe 800 may carry a DL common burst, a UL regular burst, and a UL common burst in a DL control portion 212, a UL data portion 214, and a UL control portion 216. As shown, the subframe 800 carriers the PRACH 850 in the UL data portion 214. In some embodiments, the position of the PRACH 850 may be configurable. For example, the PRACH 850 may be in both the UL data portion 214 and the UL control portion 216. In addition, the PRACH 850 may span more than one subframe 800.

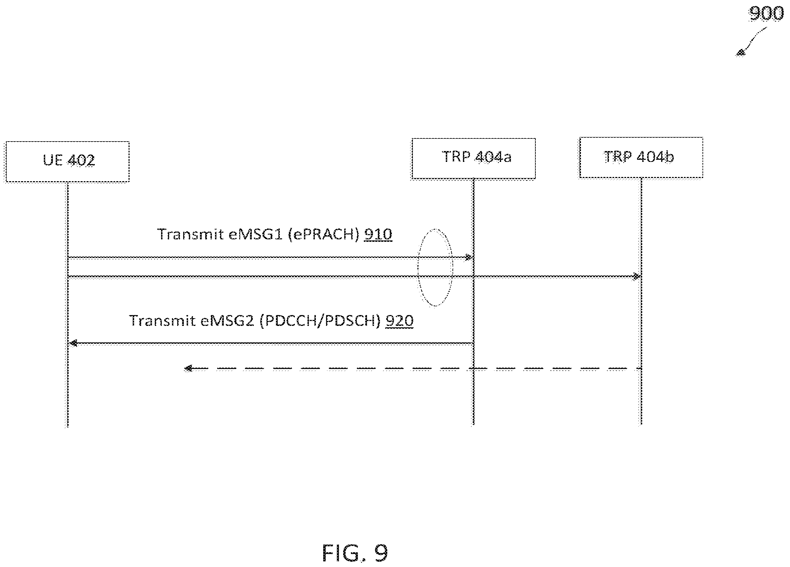

FIG. 9 is a protocol diagram of a method 900 of performing a 2-step random access according to embodiments of the present disclosure. Steps of the method 900 can be executed by computing devices (e.g., a processor, processing circuit, and/or other suitable component) of wireless communication devices, such as the BSs 104 and 600, the TRP 404, and the UEs 102, 402, and 500. The method 900 is suitable for use when a UE is in a RRC common state (e.g., the RRC common state 320). The method 900 can be better understood with reference to FIG. 4. The method 900 may employ similar mechanisms as in the network 400. As illustrated, the method 900 includes a number of enumerated steps, but embodiments of the method 900 may include additional steps before, after, and in between the enumerated steps. In some embodiments, one or more of the enumerated steps may be omitted or performed in a different order. The method 900 illustrates two TRPs 404a and 404b and one UE 402 for purposes of simplicity of discussion, though it will be recognized that embodiments of the present disclosure may scale to many more UEs 402 and/or TRPs 404.

At step 910, the UE 402 transmits an enhanced message 1 (eMSG1), which includes the MSG1 and the MSG3 of the method 700. The UE 402 may transmit the eMSG1 in an enhanced physical random access channel (ePRACH). The ePRACH includes PUSCHs and a PRACH, as described in greater detail herein. The eMSG1 may include a random access preamble, a RRC connection request, a tracking area update, a scheduling request, and a UE identifier (UE-ID). For example, the PRACH is transmitted in the PRACH of the ePRACH and the remaining eMSG1 is transmitted in the PUSCHs of the ePRACH. In some embodiments, the eMSG1 may also reach the TRP 404b as shown by the arrows in the dashed oval.

At step 920, upon detecting the eMSG1, the TRP 404a transmits an enhanced message 2 (eMSG2), which includes the MSG2 and MSG4 of the method 700. The TRP 404a may transmit allocation information for the eMSG2 in a PDCCH and the eMSG2 in a PDSCH. The eMSG2 may include a detected random access preamble ID, TA information, a C-RNTI, a backoff indicator, and a contention resolution. In some embodiments, the TRP 404b may also detect the eMSG1 and may respond with an eMSG2 as shown by the dashed arrow.

As shown, the method 900 requires two steps instead of four steps as in the method 700. Thus, the method 900 may reduce latency for random access. The method 900 is suitable for small-cell deployments or in unlicensed bands.

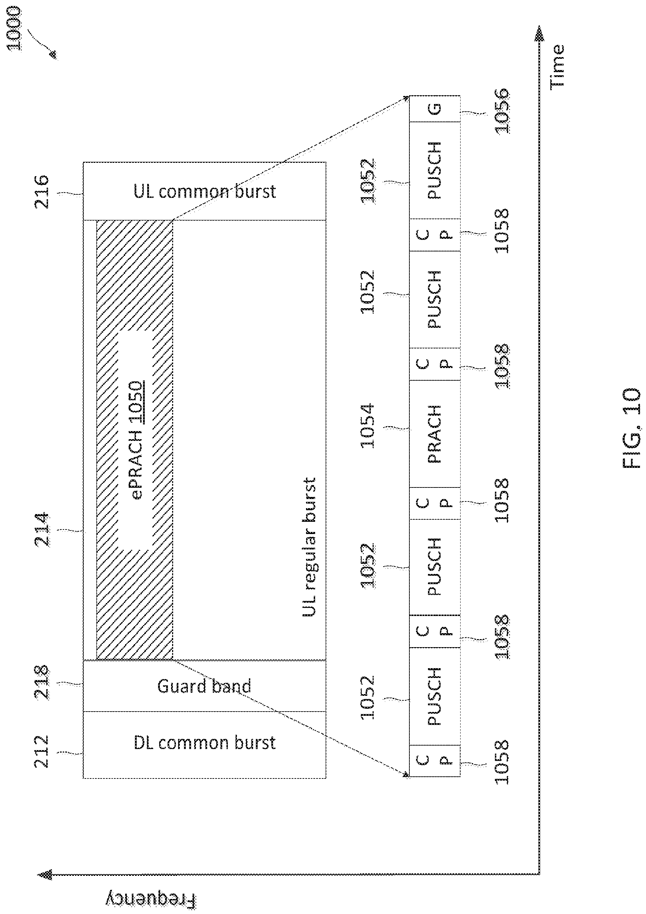

FIG. 10 illustrates a subframe 1000 that includes an ePRACH 1050 according to the present disclosure. The subframe 1000 is employed by the UE 402 when implementing the 4-step random access procedure described in the method 900. In FIG. 10, the x-axis represents time in some constant units and the y-axis represents frequency in some constant units. The subframe 1000 is a UL-centric subframe and has a similar structure as the subframe 210. The subframe 1000 may carry a DL common burst, a UL regular burst, and a UL common burst in a DL control portion 212, a UL data portion 214, and a UL control portion 216. As shown, the subframe 1000 carries the ePRACH 1050 in the UL data portion 214.

The ePRACH 1050 includes a plurality of PUSCHs 1052, a PRACH 1054, and a guard band 1056 at the end of the ePRACH 1050. The PRACH 1054 carries a random access preamble of an eMSG1 and the PUSCHs 1052 carry remaining portions of the eMSG1. Each of the PUSCHs 1052 and the PRACH 1054 includes a cyclic prefix (CP) portion 1058. Each of the PUSCHs 1052 and the PRACH 1054 may span a duration of one symbol. For example, each of the PUSCHs 1052 and the PRACH 1054 may be configured to have a tone spacing of about 15 kHz with about 256 tones, a symbol duration of about 66.67 microseconds (µs), and a CP duration of about 10 µs.

In an embodiment, the PRACH 1054 may be used as a reference signal for demodulation at the TRP 404. The PRACH 1054 is configured to be about the center of the ePRACH 1050 to provide better performance. Thus, the random access preamble may also be referred to as a random access mid-amble. The PUSCHs 1052 and the PRACH 1054 may have the same numerology or different numerologies. For example, a network may broadcast the configuration or numerology of the ePRACH 1050. In an embodiment, the tone spacing of the PRACH 1054 are configured such that the PRACH 1054 may accommodate a selected random access preamble length. For example, a random access preamble length may be selected by dimensioning cyclic shifts based on channel conditions. Although the PUSCHs 1052 and PRACH 1054 are shown as time-division multiplexed, the PUSCHs 1052 and the PRACH 1054 may be frequency-division multiplexed. The time-multiplexed PUSCHs 1052 and the PRACH 1054 may be transmitted over the same antenna ports, which may be mapped to one or more physical antennas such as the antennas 516.

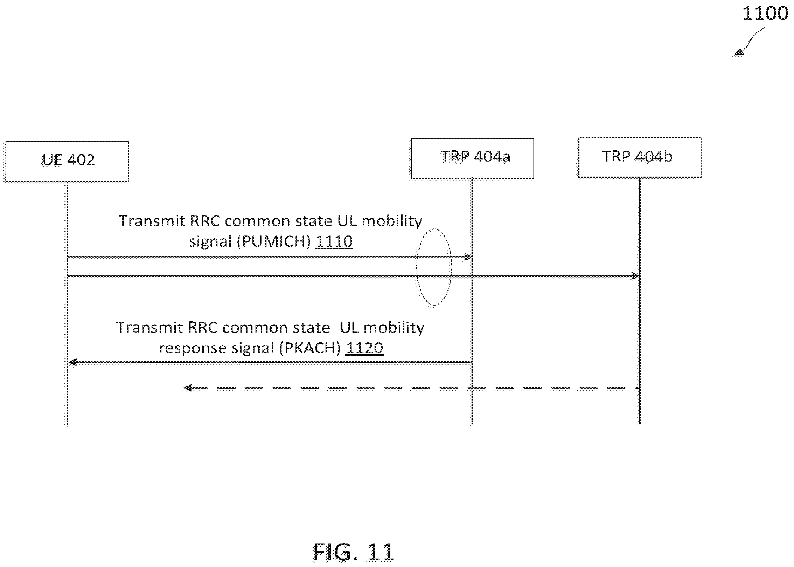

FIG. 11 is a protocol diagram of a method 1100 of performing UL mobility in a RRC common state (e.g., the RRC common state 320) according to embodiments of the present disclosure. Steps of the method 1100 can be executed by computing devices (e.g., a processor, processing circuit, and/or other suitable component) of wireless communication devices, such as the BSs 104 and 600, the TRP 404, and the UEs 102, 402, and 500. The method 1100 can be better understood with reference to FIG. 4. The method 1100 may employ similar mechanisms as in the network 400. As illustrated, the method 1100 includes a number of enumerated steps, but embodiments of the method 1100 may include additional steps before, after, and in between the enumerated steps. In some embodiments, one or more of the enumerated steps may be omitted or performed in a different order. The method 1100 illustrates two TRPs 404a and 404b and one UE 402 for purposes of simplicity of discussion, though it will be recognized that embodiments of the present disclosure may scale to many more UEs 402 and/or TRPs 404.

For example, the UE 402 has obtained a UE-ID after establishing a connection with the network and is in a RRC common state. At step 1110, the UE 402 transmits a RRC common state UL mobility signal including a UE-ID of the UE 402 and a random access preamble. The random access preamble may be similar to the random access preamble in the methods 700 and 900. When the UE 402 is in the RRC common state, the context (e.g., the UE-ID) of the UE 402 is saved in the network, but the UE 402 is not assigned with any air interface resource. Thus, UE 402 transmits the random access preamble to access the network and the UE-ID identifies the sender of the random access preamble as the UE 402. The UE 402 may transmit the UL mobility signal in a PUMICH. The PUMICH includes PUSCHs and a PRACH, as described in greater detail herein. For example, the random access preamble is transmitted in the PRACH and the UE-ID is transmitted in the PUSCHs. In some embodiments, the RRC common state UL mobility signal may also reach the TRP 404b as shown by the arrows in the dashed oval.

At step 1120, upon detecting the UE-ID and the random access preamble, the TRP 404a transmits a UL mobility response signal including a PUMICH ACK and a paging indicator to the UE 402. The TRP 404a may transmit the UL mobility response signal in a physical keep alive channel (PKACH). The PUMICH ACK may have a length of one bit. For example, a bit-value of 1 indicates an acknowledgement (ACK) of a successful reception of the PUMICH and a bit-value of 0 indicates a not-ACK (NACK) that the PUMICH is received with error. When the UE 402 fails to receive an ACK, the UE 402 may perform power control, for example, to increase the transmit power, for a next UL mobility signal transmission. In an embodiment, when the UE 402 is in the RRC common state, the UE 402 may transmit the UL mobility signal periodically, for example, at every 1.28 second (sec) and the TRP 404a may transmit a paging indicator along with the PUMICH ACK. Thus, the transmission of PUMICH facilitates UL mobility management and UE paging indicator polling.

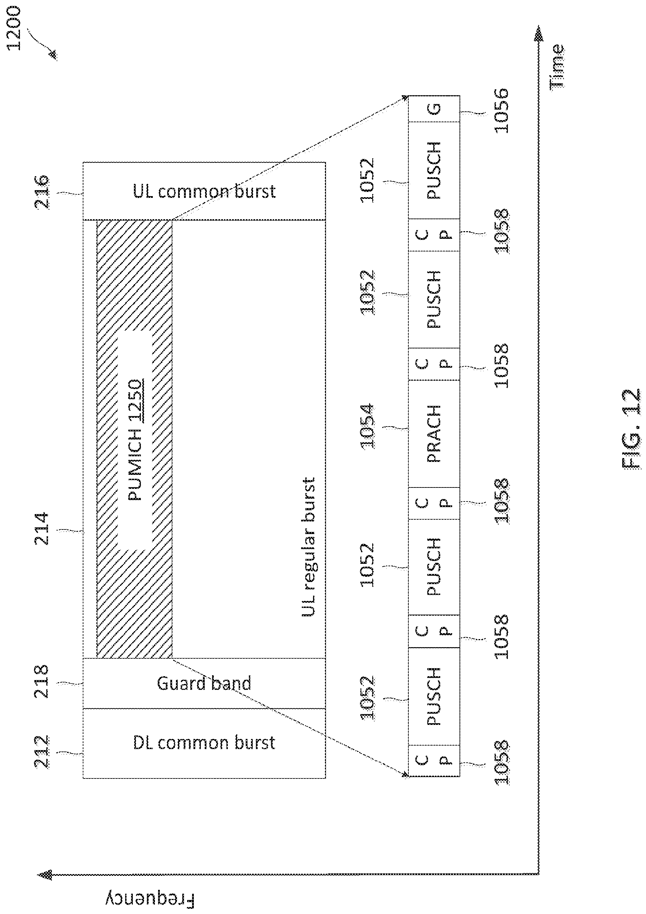

FIG. 12 illustrates a subframe 1200 that includes a PUMICH 1250 according to the present disclosure. The subframe 1200 is employed by the UE 402 when implementing the UL mobility procedure described in the method 1100. In FIG. 12, the x-axis represents time in some constant units and the y-axis represents frequency in some constant units. The subframe 1200 is similar to the subframe 1000, but includes the PUMICH 1250 instead of the ePRACH 1050. As shown, the subframe 1200 carries the PUMICH 1250 in a UL data portion 214. The position of the PUMICH 1250 within the subframe 1200 may be configurable. For example, a network may broadcast the configuration of the PUMICH 1250. The PUMICH 1250 has a similar structure as the ePRACH 1050. For example, the PRACH 1054 carries the random access preamble of the RRC common state UL mobility signal and the PUSCHs 1052 carry the UE-ID of the RRC common state UL mobility signal of the method 1100.

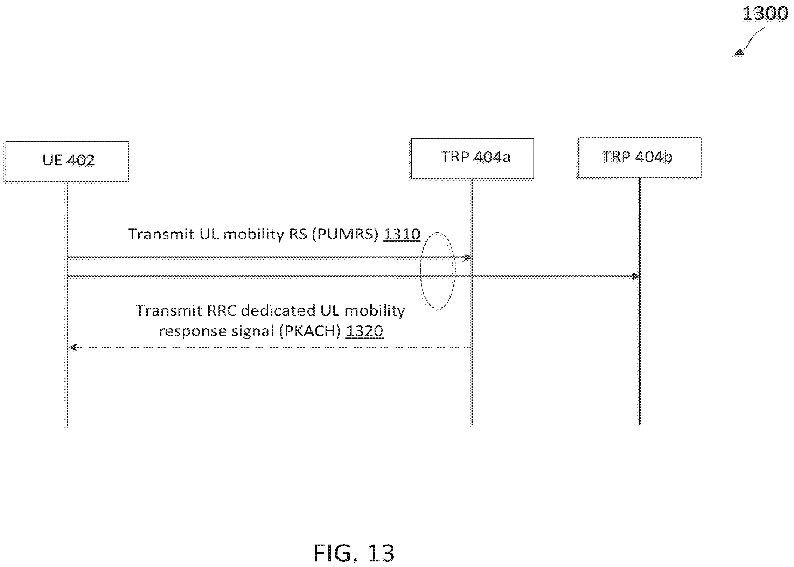

FIG. 13 is a protocol diagram of a method 1300 of performing UL mobility in a RRC dedicated state (e.g., the RRC dedicated state 310) according to embodiments of the present disclosure. Steps of the method 1300 can be executed by computing devices (e.g., a processor, processing circuit, and/or other suitable component) of wireless communication devices, such as the BSs 104 and 600, the TRP 404, and the UEs 102, 402, and 500. The method 1300 can be better understood with reference to FIG. 3. The method 1300 may employ similar mechanisms as in the network 400. As illustrated, the method 1300 includes a number of enumerated steps, but embodiments of the method 1300 may include additional steps before, after, and in between the enumerated steps. In some embodiments, one or more of the enumerated steps may be omitted or performed in a different order. The method 1300 illustrates two TRPs 404a and 404b and one UE 402 for purposes of simplicity of discussion, though it will be recognized that embodiments of the present disclosure may scale to many more UEs 402 and/or TRPs 404.

For example, the UE 402 has obtained a UE-ID after establishing a connection with the network and is in a RRC dedicated state. At step 1310, the UE 402 transmits a UL mobility RS in a PUMRS channel, as described in greater detail herein. In an embodiment, the UL mobility RS includes a sounding reference signal (SRS) with an extended CP. The extended CP may enable the UL mobility RS to reach multiple TRPs. In some embodiments, the UE 402 may transmit the UL mobility RS in one or more transmit antenna ports that are the same or different from the regular SRS transmissions for sounding measurements. In some embodiments, the UL mobility RS may also reach the TRP 404b as shown by the arrows in the dashed oval.

At step 1320, the TRP 404a transmits a RRC dedicated UL mobility response signal in a PKACH. The network may perform mobility management based on the UL mobility RS. For example, the network may measure the receive signal strength of the UL mobility RS and tracks the mobility of the UE 402 based on the receive signal strength. In some embodiments, the network may determine to hand the UE 402 control over to another cell when the signal strength received from a current serving cell (e.g., the TRP 404a) is weak. Thus, the RRC dedicated UL mobility signal may include information associated with handover.

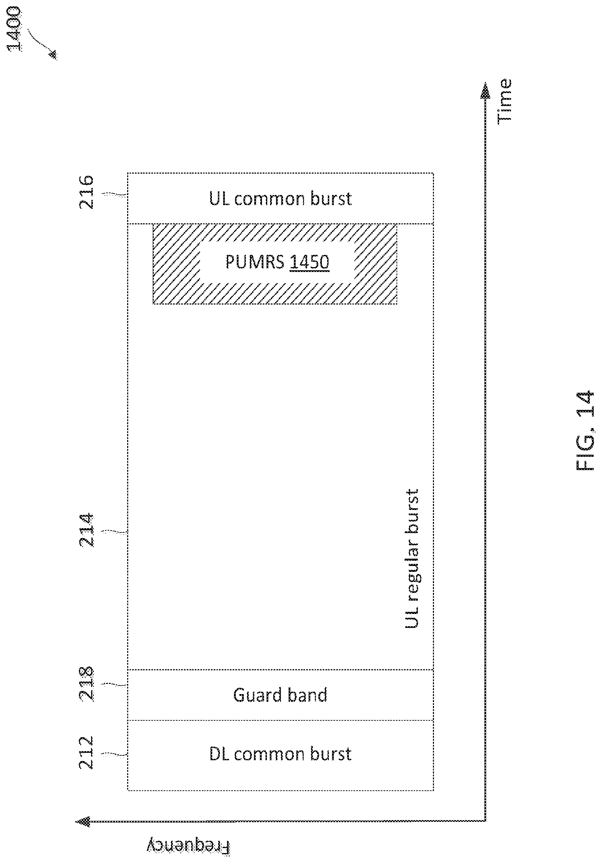

FIG. 14 illustrates a subframe 1400 including a PUMRS channel 1450 according to the present disclosure. The subframe 1400 is employed by the UE 402 when implementing the UL mobility procedure described in the method 1300. In FIG. 14, the x-axis represents time in some constant units and the y-axis represents frequency in some constant units. The subframe 1400 has a similar structure as the subframes 210, 800, 1000, and 1200 and includes the PUMRS channel 1450. As shown, the subframe 1400 carries PUMRS channel 1450 in a UL data portion 214. The position of the PUMRS channel 1450 within the UL data portion 214 may be configurable. For example, a network may broadcast the configuration of the PUMRS channel 1450. In an embodiment, the PUMRS channel 1450 spans a time duration of one symbol. For example, the PUMRS channel 1450 carries the UL mobility RS of the method 1300.

In an embodiment, the UL-based mobility mechanisms described in the methods 1100 and 1300 and the 2-step random access mechanisms described in the method 900 are suitable for use in small-cell areas, for example, with a cell radius of less than about 1.5 kilometers (km). The network 400 may employ two sets of random access preamble sequences with cyclic shifts, one set for random access procedure and the other set for UL mobility. In an embodiment, each set may include 64 Zadoff-Chu sequences, gold sequences, m-sequences, or any suitable orthogonal sequences. The following table illustrates an example configuration for the PRACH 1054 and the PUSCHs 1052 of the ePRACH 1050 or the PUMICH 1250 with a bandwidth of 3.84 MHz:

**Table 1 - Example Configuration for PRACH and PUSCH in ePRACH or PUMICH**

| Channel | SCS (kHz) | Symbol duration (us) | CP (us) | Number of tones | Number of symbols |
|---|---|---|---|---|---|
| PRACH | 15 | 66.67 | 10 | 256 | 1 |
| PUSCH | 15 | 66.67 | 10 | 256 | 4 |

A UE may transmit a random access preamble over multiple subframes (e.g., the subframes) based on link budget. The UE may transmit the random access preamble based on one numerology and the data based on another numerology when transmitting the eMSG1 or the RRC common state UL mobility signal. A BS or a TRP may utilize the random access preamble as a demodulation references signal to demodulate the data or the PUSCH.

In an embodiment, the random access procedure described above may be suitable for use is in large-cell deployment. The PRACH may be configured similar to the LTE PRACH in terms of random access preamble sequences (e.g., Zadoff-Chu with cyclic shifts), dimensioning of cyclic shifts such that delay spread and/or Doppler shift have minimal impacts on the RACH sequence cross-correlation. For example, the CP length may be dimensioned and a RACH sequence may be repeated to support different cell range requirements. The following table shows example PRACH formats and configurations:

**Table 2 - Example PRACH Format**

| Format | BW (MHz) | SCS (kHz) | CP (us) | SEQ (us) | Guard (us) | Duration (ms) | Cell radius (km) |
|---|---|---|---|---|---|---|---|
| 0 | 1.08 | 1.25 | 103.1 | 800 | 96.9 | 1 | 14.5 |
| 1 | 1.08 | 1.25 | 684.4 | 800 | 515.6 | 2 | 77.3 |
| 2 | 1.08 | 1.25 | 203.1 | 1600 | 196.9 | 2 | 29.5 |
| 3 | 1.08 | 1.25 | 684.4 | 1600 | 715.6 | 3 | 107.3 |

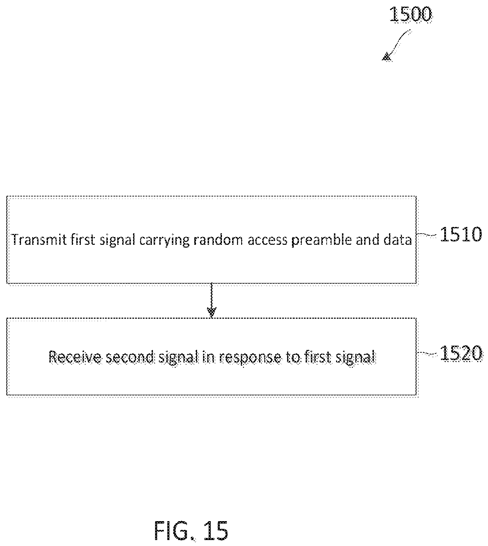

FIG. 15 is a flow diagram of a method 1500 of performing UL-based mobility and random access according to embodiments of the present disclosure. Steps of the method 1500 can be executed by a computing device (e.g., a processor, processing circuit, and/or other suitable component) of a wireless communication device, such as the UEs 402 and 500. The method 1500 may employ similar mechanisms as in the methods 900, 1100, and 1300. The method 1500 can be better understood with reference to FIG. 3. As illustrated, the method 1500 includes a number of enumerated steps, but embodiments of the method 1500 may include additional steps before, after, and in between the enumerated steps. In some embodiments, one or more of the enumerated steps may be omitted or performed in a different order.

At step 1510, the method 1500 includes transmitting a first signal carrying a random access preamble and data, for example, by a UE. At step 1520, the method includes receiving a second signal in response to the first signal. In an embodiment of random access, the first signal carries the eMSG1 as described in the method 900, where the data may include at least one of a connection request, tracking area updated information, a scheduling request, or a UE-ID of the UE. The second signal may include at least one of a random access preamble ID of the random access preamble, timing advance information, backoff information, or a contention resolution.

In an embodiment UL-based mobility, the first signal carries the RRC common state UL mobility signal as described in the method 1100, where the data carries a UE-ID of the UE. The second signal may include at least one of an acknowledgement for the first signal or paging information.

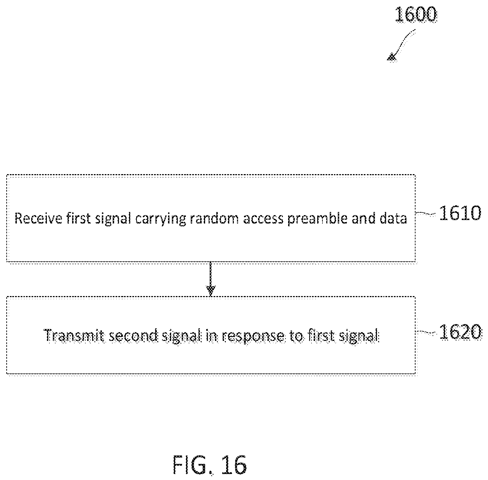

FIG. 16 is a flow diagram of a method 1600 of performing UL-based mobility and random access according to embodiments of the present disclosure. Steps of the method 1600 can be executed by a computing device (e.g., a processor, processing circuit, and/or other suitable component) of a wireless communication device, such as the TRPs 404 and the BS 600. The method 1600 may employ similar mechanisms as in the methods 900, 1100, and 1300. The method 1600 can be better understood with reference to FIG. 3. As illustrated, the method 1600 includes a number of enumerated steps, but embodiments of the method 1600 may include additional steps before, after, and in between the enumerated steps. In some embodiments, one or more of the enumerated steps may be omitted or performed in a different order.

At step 1610, the method 1600 includes receiving a first signal carrying a random access preamble and data, for example, by a TRP. At step 1620, the method includes transmitting a second signal in response to the first signal. In an embodiment of random access, the first signal carries the eMSG1 as described in the method 900, where the data may include at least one of a connection request, tracking area updated information, a scheduling request, or a UE-ID of the UE. The second signal may include at least one of a random access preamble ID of the random access preamble, timing advance information, backoff information, or a contention resolution.

In an embodiment UL-based mobility, the first signal carries the RRC common state UL mobility signal as described in the method 1100, where the data carries a UE-ID of the UE. The second signal may include at least one of an acknowledgement for the first signal or paging information.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (*e.g*., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items (for example, a list of items prefaced by a phrase such as "at least one of" or "one or more of") indicates an inclusive list such that, for example, a list of [at least one of A, B, or C] means A or B or C or AB or AC or BC or ABC (i.e., A and B and C).

The scope of the invention is defined by the subject-matter defined in the appended claims.

## Claims

1. A method of wireless communication in a network, comprising:
transmitting, by a user equipment, UE, a first signal carrying a random access preamble and a connection request message, the connection request message including a first and a second portion spaced apart in time by the random access preamble, wherein the transmitting comprises transmitting the random access preamble after the first portion of the connection request message and before the second portion of the connection request message; and
receiving, by the UE from a network device in response to the first signal, a second signal, including at least a random access response based on the random access preamble and a connection response based on the connection request message.

2. The method of claim 1, further comprising transmitting the first signal by:
transmitting the first signal in a uplink, UL,-centric subframe (210), including a downlink, DL, control portion (212) for carrying DL control, a UL data portion (214) for carrying UL data, and a UL control portion (216) for carrying UL control.

3. The method of claim 1, further comprising:
transmitting, by the UE, a UL-based mobility reference signal; and
receiving, by the UE from the network device, a third signal.

4. The method claim 3, further comprising receiving the third signal including paging information and an UL-based mobility reference signal acknowledgment.

5. A method of wireless communication in a network, comprising:
receiving, by a network device from a user equipment, UE, a first signal carrying a random access preamble and a connection request message, the connection request message including a first and a second portion spaced apart in time by the random access preamble, wherein the receiving comprises receiving the random access preamble after the first portion of the connection request message and before the second portion of the connection request message; and
transmitting, by the network device to the UE in response to the first signal, a second signal, including at least a random access response based on the random access preamble and a connection response based on the connection request message.

6. The method of claim 5, further comprising:
transmitting, by the network device, a configuration; and
receiving the first signal according to the configuration.

7. The method of claim 5, further comprising:
receiving, by the network device from the UE, a UL-based mobility reference signal; and
performing, by the network device, mobility management associated with the UE.

8. The method of claim 7, further comprising transmitting, by the network device to the UE, a third signal indicating handover information for the UE.

9. A user equipment, UE, comprising:
means for transmitting a first signal carrying a random access preamble and a connection request message, the connection request message including a first and a second portion spaced apart in time by the random access preamble, wherein the transmitting comprises transmitting the random access preamble after the first portion of the connection request message and before the second portion of the connection request message; and
means for receiving, from a network device in response to the first signal, a second signal, including at least a random access response based on the random access preamble and a connection response based on the connection request message.

10. A network device comprising:
means for receiving, from a user equipment, UE, a first signal carrying a random access preamble and a connection request message, the connection request message including a first and a second portion spaced apart in time by the random access preamble, wherein the receiving comprises receiving the random access preamble after the first portion of the connection request message and before the second portion of the connection request message; and
means for transmitting, to the UE in response to the first signal, a second signal, including at least a random access response based on the random access preamble and a connection response based on the connection request message.

## Patentansprüche

1. Ein Verfahren zur drahtlosen Kommunikation in einem Netzwerk, aufweisend:
Übertragen, durch ein Benutzergerät, UE, eines ersten Signals, das eine Zufallszugriffspräambel und eine Verbindungsanforderungsnachricht trägt, wobei die Verbindungsanforderungsnachricht einen ersten und einen zweiten Teil enthält, die durch die Zufallszugriffspräambel zeitlich beabstandet sind, wobei das Übertragen aufweist Übertragen der Zufallszugriffspräambel nach dem ersten Teil der Verbindungsanforderungsnachricht und vor dem zweiten Teil der Verbindungsanforderungsnachricht; und
Empfangen, durch das UE von einem Netzwerkgerät als Antwort auf das erste Signal, eines zweiten Signals, enthaltend mindestens eine Zufallszugriffsantwort basierend auf der Zufallszugriffspräambel und eine Verbindungsantwort basierend auf der Verbindungsanforderungsnachricht.

2. Das Verfahren nach Anspruch 1, weiter aufweisend Übertragen des ersten Signals durch:
Übertragen des ersten Signals in einem Aufwärtsverbindungs-, UL-, zentrischen Unterrahmen (210), enthaltend einen Abwärtsverbindungs-, DL-, Steuerungsteil (212) zum Tragen von DL-Steuerung, einen UL-Datenteil (214) zum Tragen von UL-Daten und einen UL-Steuerungsteil (216) zum Tragen von UL-Steuerung.

3. Das Verfahren nach Anspruch 1, weiter aufweisend:
Übertragen, durch das UE, eines UL-basierten Mobilitätsreferenzsignals; und
Empfangen, durch das UE, eines dritten Signals von dem Netzwerkgerät.

4. Das Verfahren nach Anspruch 3, weiter aufweisend Empfangen des dritten Signals, das Paging-Information und eine UL-basierte Mobilitätsreferenzsignalbestätigung enthält.

5. Ein Verfahren zur drahtlosen Kommunikation in einem Netzwerk, aufweisend:
Empfangen, durch ein Netzwerkgerät von einem Benutzergerät, UE, eines ersten Signals, das eine Zufallszugriffspräambel und eine Verbindungsanforderungsnachricht trägt, wobei die Verbindungsanforderungsnachricht einen ersten und einen zweiten Teil enthält, die durch die Zufallszugriffspräambel zeitlich beabstandet sind, wobei das Empfangen, Empfangen der Zufallszugriffspräambel nach dem ersten Teil der Verbindungsanforderungsnachricht und vor dem zweiten Teil der Verbindungsanforderungsnachricht aufweist; und
Übertragen, durch das Netzwerkgerät an das UE als Antwort auf das erste Signal, eines zweiten Signals, enthaltend mindestens eine Zufallszugriffsantwort basierend auf der Zufallszugriffspräambel und eine Verbindungsantwort basierend auf der Verbindungsanforderungsnachricht.

6. Das Verfahren nach Anspruch 5, weiter aufweisend:
Übertragen, durch das Netzwerkgerät, einer Konfiguration; und
Empfangen des ersten Signals gemäß der Konfiguration.

7. Das Verfahren nach Anspruch 5, weiter aufweisend:
Empfangen, durch das Netzwerkgerät von dem UE, eines UL-basierten Mobilitätsreferenzsignals; und
Durchführen, durch das Netzwerkgerät, eines mit dem UE verbundenen Mobilitätsmanagements.

8. Das Verfahren nach Anspruch 7, weiter aufweisend:
Übertragen, durch das Netzwerkgerät an das UE, eines dritten Signals, das Handover-Information für das UE anzeigt.

9. Ein Benutzergerät, UE, aufweisend:
Mittel zum Übertragen eines ersten Signals, das eine Zufallszugriffspräambel und eine Verbindungsanforderungsnachricht trägt, wobei die Verbindungsanforderungsnachricht einen ersten und einen zweiten Teil enthält, die durch die Zufallszugriffspräambel zeitlich beabstandet sind, wobei das Übertragen aufweist Übertragen der Zufallszugriffspräambel nach dem ersten Teil der Verbindungsanforderungsnachricht und vor dem zweiten Teil der Verbindungsanforderungsnachricht; und
Mittel zum Empfangen, von einem Netzwerkgerät als Antwort auf das erste Signal, eines zweiten Signals, enthaltend mindestens eine Zufallszugriffsantwort basierend auf der Zufallszugriffspräambel und eine Verbindungsantwort basierend auf der Verbindungsanforderungsnachricht.

10. Ein Netzwerkgerät, aufweisend:
Mittel zum Empfangen, von einem Benutzergerät, UE, eines ersten Signals, das eine Zufallszugriffspräambel und eine Verbindungsanforderungsnachricht trägt, wobei die Verbindungsanforderungsnachricht einen ersten und einen zweiten Teil enthält, die durch die Zufallszugriffspräambel zeitlich beabstandet sind, wobei das Empfangen, Empfangen der Zufallszugriffspräambel nach dem ersten Teil der Verbindungsanforderungsnachricht und vor dem zweiten Teil der Verbindungsanforderungsnachricht aufweist; und
Mittel zum Übertragen, an das UE als Antwort auf das erste Signal, eines zweiten Signals, enthaltend mindestens eine Zufallszugriffsantwort basierend auf der Zufallszugriffspräambel und eine Verbindungsantwort basierend auf der Verbindungsanforderungsnachricht.

## Revendications

1. Un procédé de communication sans fil dans un réseau comprenant :
la transmission, par un équipement utilisateur, UE, d'un premier signal portant un préambule d'accès aléatoire et un message de requête de connexion, le message de requête de connexion incluant une première partie et une seconde partie espacées dans le temps par le préambule d'accès aléatoire, dans lequel la transmission comprend la transmission du préambule d'accès aléatoire après la première partie du message de requête de connexion et avant la seconde partie du message de requête de connexion ; et
la réception, par l'UE à partir d'un dispositif de réseau en réponse au premier signal, d'un second signal incluant au moins une réponse d'accès aléatoire sur la base du préambule d'accès aléatoire et une réponse de connexion sur la base du message de requête de connexion.

2. Le procédé selon la revendication 1, comprenant en outre la transmission du premier signal par :
la transmission du premier signal dans une sous-trame centrique de liaison montante, UL, (210) incluant une partie de contrôle de liaison descendante, DL, (212) pour porter un contrôle DL, une partie de donnée UL (214) pour porter une donnée UL, et une partie de contrôle UL (216) pour porter un contrôle UL.

3. Le procédé selon la revendication 1, comprenant en outre :
la transmission, par l'UE, d'un signal de référence de mobilité basée sur UL ; et
la réception, par l'UE à partir du dispositif de réseau, d'un troisième signal.

4. Le procédé selon la revendication 3, comprenant en outre la réception du troisième signal incluant une information de paging et un accusé de réception de signal de référence de mobilité basée sur UL.

5. Un procédé de communication sans fil dans un réseau comprenant :
la réception, par un dispositif de réseau à partir d'un équipement utilisateur, UE, d'un premier signal portant un préambule d'accès aléatoire et un message de requête de connexion, le message de requête de connexion incluant une première partie et une seconde partie espacées dans le temps par le préambule d'accès aléatoire, dans lequel la réception comprend la réception du préambule d'accès aléatoire après la première partie du message de requête de connexion et avant la seconde partie du message de requête de connexion ; et
la transmission, par le dispositif de réseau à l'UE en réponse au premier signal, d'un second signal incluant au moins une réponse d'accès aléatoire sur la base du préambule d'accès aléatoire et une réponse de connexion sur la base du message de requête de connexion.

6. Le procédé selon la revendication 5, comprenant en outre
la transmission, par le dispositif de réseau, d'une configuration ; et
la réception du premier signal en fonction de la configuration.

7. Le procédé selon la revendication 5, comprenant en outre :
la réception, par le dispositif de réseau à partir de l'UE, d'un signal de référence de mobilité basée sur UL ; et
la réalisation, par le dispositif de réseau, d'une gestion de mobilité associé à l'UE.

8. Le procédé selon la revendication 7, comprenant en outre la transmission, par le dispositif de réseau à l'UE, d'un troisième signal indiquant une information de handover pour l'UE.

9. Un équipement utilisateur, UE, comprenant :
un moyen pour transmettre un premier signal portant un préambule d'accès aléatoire et un message de requête de connexion, le message de requête de connexion incluant une première partie et une seconde partie espacées dans le temps par le préambule d'accès aléatoire, dans lequel la transmission comprend la transmission du préambule d'accès aléatoire après la première partie du message de requête de connexion et avant la seconde partie du message de requête de connexion ; et
un moyen pour recevoir, à partir d'un dispositif de réseau en réponse au premier signal, un second signal incluant au moins une réponse d'accès aléatoire sur la base du préambule d'accès aléatoire et une réponse de connexion sur la base du message de requête de connexion.

10. Un dispositif de réseau comprenant :
un moyen pour recevoir, à partir d'un équipement utilisateur, UE, un premier signal portant un préambule d'accès aléatoire et un message de requête de connexion, le message de requête de connexion incluant une première partie et une seconde partie espacées dans le temps par le préambule d'accès aléatoire, dans lequel la réception comprend la réception du préambule d'accès aléatoire après la première partie du message de requête de connexion et avant la seconde partie du message de requête de connexion ; et
un moyen pour transmettre, à l'UE en réponse au premier signal, un second signal incluant au moins une réponse d'accès aléatoire sur la base du préambule d'accès aléatoire et une réponse de connexion sur la base du message de requête de connexion.
